# EUROPÄISCHE PATENTSCHRIFT

(11) **EP 4 309 280 B1**
(45) Veröffentlichungstag und Bekanntmachung des Hinweises auf die Patenterteilung: **21.10.2026**
(21) Anmeldenummer: 22711901.3
(22) Anmeldetag: 21.02.2022
(51) Int. Cl.: H02M 1/00, H02M 1/44, H02M 3/155, H02M 7/06, H02P 3/04

(54) **VERFAHREN ZUR BEREITSTELLUNG EINER SPANNUNG FÜR EINEN VERBRAUCHER UND VORRICHTUNG ZUR DURCHFÜHRUNG EINES VERFAHRENS**
METHOD FOR PROVIDING A VOLTAGE FOR A LOAD, AND DEVICE FOR CARRYING OUT A METHOD
PROCÉDÉ PERMETTANT DE FOURNIR UNE TENSION POUR UNE CHARGE ET DISPOSITIF PERMETTANT DE METTRE EN ?UVRE UN PROCÉDÉ

(30) Priorität: 16.03.2021 DE 102021001370
(43) Veröffentlichungstag der Anmeldung: 24.01.2024
(73) Patentinhaber: SEW-EURODRIVE GmbH & Co. KG, 76646 Bruchsal (DE)
(72) Erfinder: EPSKAMP, Torsten, 75015 Bretten (DE); HARTMANN, Frank, 68789 St. Leon Rot (DE); STAHL, Alexander, 76131 Karlsruhe (DE); AXTMANN, Christian, 76359 Marxzell (DE)
(86) Internationale Anmeldenummer: PCT/EP2022/054269
(87) Internationale Veröffentlichungsnummer: WO 2022/194493

(56) Entgegenhaltungen:
- WO-A1-99/10975
- DE-A1- 19 734 405
- US-A1- 2010 109 598

## Beschreibung

Die Erfindung betrifft ein Verfahren zur Bereitstellung einer Spannung für einen Verbraucher und eine Vorrichtung zur Durchführung eines Verfahrens.

Es ist allgemein bekannt, dass bei einer Phasenanschnittsteuerung mittels Thyristoren die Spannung abrupt eingeschaltet wird.

**Aus der** US 2010 / 109 598 A1 **ist als nächstliegender Stand der Technik ein Verfahren zur Bereitstellung einer Spannung für einen Verbraucher bekannt.**

**Aus der** WO 99/ 10975 A1 **ist ein Verfahren zum Betrieb einer elektromagnetisch betätigbaren Bremse eines Elektromotors bekannt.**

**Aus der** DE 197 34 405 A1 **ist ein Verfahren zum Betreiben eines Elektromotors bekannt.**

Der Erfindung liegt daher die Aufgabe zugrunde, eine elektromagnetisch betätigbare Bremse eines Elektromotors emissionsarm zu betreiben.

Erfindungsgemäß wird die Aufgabe bei dem Verfahren nach den in Anspruch 1 und bei der Vorrichtung nach den in Anspruch 14 angegebenen Merkmalen gelöst.

Wichtige Merkmale der Erfindung bei dem Verfahren sind, dass das Verfahren zur Bereitstellung einer Spannung für einen Verbraucher vorgesehen ist, insbesondere für eine Induktivität und/oder Spule einer elektromagnetisch betätigbaren Bremse, insbesondere eines Elektromotors, wobei, insbesondere zeitlich wiederkehrend, die positive Halbwellen einer, insbesondere einphasigen, Wechselspannung ab einem ersten Phasenwinkel der Wechselspannung pulsweitenmoduliert und ab einem zweiten Phasenwinkel unmoduliert, insbesondere und/oder ungesteuert und/oder direkt, dem Verbraucher zur Verfügung gestellt wird.

Von Vorteil ist dabei, dass die Spannung beim zweiten Phasenwinkel nicht abrupt erhöht wird sondern mittels der vorgeordneten Pulsweitenmodulation glatt ansteigt, insbesondere also stetig differenzierbar. Dadurch sind Geräuschemissionen und auch EMV-Emissionen verringerbar.

**Erfindungsgemäß** wird zwischen dem ersten Phasenwinkel und dem zweiten Phasenwinkel ein Pulsweitenmodulationsverhältnis als Funktion der Zeit, insbesondere oder des Phasenwinkels, derart gesteuert, dass ein von Null an ansteigender Verlauf der Spannung, insbesondere ein von Null an ansteigender, über eine Pulsweitenmodulationsperiode gleitend gemittelte Verlauf der Spannung, dem Verbraucher zur Verfügung gestellt wird. Von Vorteil ist dabei, dass der Spannungsanstieg gemäß einem Verlauf steuerbar ist. Somit ist ein glatter Verlauf erreichbar.

Beim ersten Phasenwinkel beträgt die erste Ableitung des Verlaufs nach der Zeit Null. Von Vorteil ist dabei, dass die Spannung stetig differenzierbar von Null an ansteigt.

Beim zweiten Phasenwinkel verläuft die erste Ableitung des Verlaufs nach der Zeit stetig. Von Vorteil ist dabei, dass ein glatter Anschluss der Pulsweitenmodulierten Spannung ermöglicht ist. Genauer gesagt, ist bei der pulsweitenmodulierten Spannung der über eine Pulsweitenmodulationsperiode gebildete, insbesondere gleitende, Mittelwert der Spannung glatt, also stetig differenzierbar übergehend in die nach dem Phasenwinkel vorliegende Spannung, wie auch beim ersten Phasenwinkel von Null an glatt ansteigend. Auf diese Weise sind Geräuschemissionen verminderbar.

Bei einer vorteilhaften Ausgestaltung ist der Verlauf glatt, insbesondere stetig differenzierbar. Von Vorteil ist dabei, dass Geräuschemissionen verringerbar sind und dass ein glatter Spannungsverlauf erreichbar ist, wenn der über die Pulsweitenmodulationsperiode gemittelte Spannungsverslauf betrachtet wird.

Bei einer vorteilhaften Ausgestaltung weist der Verlauf Klothoidenabschnitte und/oder sinusoidale Abschnitte auf. Von Vorteil ist dabei, dass ein glatter Spannungsverlauf erreichbar ist, wenn der über die Pulsweitenmodulationsperiode gemittelte Spannungsverslauf betrachtet wird.

Bei einer vorteilhaften Ausgestaltung weist der Verlauf eine S-Kurve auf. Von Vorteil ist dabei, dass ein glatter Spannungsverlauf erreichbar ist, wenn der über die Pulsweitenmodulationsperiode gemittelte Spannungsverslauf betrachtet wird.

Bei einer vorteilhaften Ausgestaltung werden die positiven Halbwellen einer einphasigen Wechselspannung einer Parallelschaltung von zwei Halbbrücken zugeführt, welche jeweils eine Reihenschaltung aus zwei steuerbaren Halbleiterschaltern aufweisen, deren Ansteuersignale von einer Signalelektronik erzeugt werden,
wobei aus den beiden Knotenpunkten, insbesondere also Verbindungsstellen der beiden Halbleiterschalter, der jeweiligen Halbbrücke die Spannung dem Verbraucher zur Verfügung gestellt wird
   oder
es werden die positiven Halbwellen einer einphasigen Wechselspannung einer Parallelschaltung von zwei Halbbrücken zugeführt, welche jeweils eine Reihenschaltung aus einem steuerbaren Halbleiterschalter und einer Diode aufweisen,
wobei die Ansteuersignale für die beiden steuerbaren Halbleiterschalter von einer Signalelektronik erzeugt werden,
wobei aus den beiden Knotenpunkten, insbesondere also Verbindungsstellen der jeweiligen Diode mit dem jeweiligen Halbleiterschalter, der jeweiligen Halbbrücke die Spannung dem Verbraucher zur Verfügung gestellt wird.

Von Vorteil ist dabei, dass der Verbraucher, insbesondere die Spule, eine Spannung bereitgestellt bekommt, die zwischen den Knotenpunkten der beiden Halbbrücken der Parallelschaltung bereitgestellt wird. An seinem wechselspannungsseitigen Anschluss wird eine Wechselspannung vorgesehen, die den Wechselrichter speist. Der gleichspannungsseitige Anschluss stellt dem Verbraucher eine unipolare Spannung zur Verfügung. Dabei ist eine Phasenanschnittsteuerung, insbesondere für eine jeweilige positive Halbwelle der Wechselspannung realisiert, die aber nur so weit durchgeleitet wird, dass die Sollspannung erreichbar ist. Hierzu wird der zweite Phasenwinkel auf einen Wert zwischen 0° und 180° gestellt.

Bei einer vorteilhaften Ausgestaltung mit zwei steuerbaren, in Reihe angeordneten Halbleitern werden beim Nulldurchgang der Wechselspannung oder des zugehörigen Stroms die Halbleiterschalter derart angesteuert, insbesondere alle geöffnet oder nur die beiden oberen Halbleiterschalter der beiden Reihenschaltungen geöffnet und die beiden unteren Halbleiterschalter der beiden Reihenschaltungen geschlossen. Von Vorteil ist dabei, dass ab dem Nulldurchgang keine Spannung dem Verbraucher mehr zur Verfügung gestellt wird.

Bei einer vorteilhaften Ausgestaltung wird der dem Verbraucher zugeführte Istwert des Stromes erfasst, insbesondere gemittelt über eine Periodendauer der Wechselspannung, und der zweite Phasenwinkel derart gestellt wird, dass der Istwert auf einen Sollwert des Stromes hingeregelt wird,
insbesondere wobei in jeder Periode der Wechselspannung dem zweiten Phasenwinkel nur ein einziger Wert zugeordnet wird. Von Vorteil ist dabei, dass nur im Takt der Pulsweitenmodulation der Wert verändert wird und somit hochfrequente Überregulierungen vermeidbar sind. Außerdem ist durch dieses einem Tiefpass ähnliche Verhalten vermieden, dass hochfrequente Schwingungen ausgebildet werden.

Bei einer vorteilhaften Ausgestaltung wird in einer jeweiligen Periode der Wechselspannung der erste Phasenwinkel, insbesondere abhängig vom zweiten Phasenwinkel der jeweiligen Periode der Wechselspannung, derart bestimmt, dass er einen vorgegebenen, insbesondere konstanten, Winkelabstand vom zweiten Phasenwinkel aufweist,
insbesondere wobei der Winkelabstand zwischen 10° und 45°, insbesondere zwischen 30° und 40°, beträgt,
insbesondere so dass bei Veränderung des zweiten Phasenwinkels der Verlauf angepasst werden muss. Von Vorteil ist dabei, dass für den glatten Verlauf genügend Zeitspanne zur Verfügung gestellt wird.

Bei einer vorteilhaften Ausgestaltung beträgt die Pulsweitenmodulationsfrequenz zwischen 5kHz und 100 kHz, insbesondere im nichthörbaren Beriech liegt und/oder zwischen 15 und 30 kHz beträgt. Von Vorteil ist dabei, dass weniger hörbare Geräuschemissionen auftreten.

Bei einer vorteilhaften Ausgestaltung wird die Wechselspannung erfasst, insbesondere gemittelt über eine Periodendauer der Wechselspannung, und zum Lüften der Bremse der zweite Phasenwinkel derart gesteuert wird, dass eine an der Spule anliegende Sollspannung der Spule bereitgestellt wird. Von Vorteil ist dabei, dass die an der Spule anliegende Spannung steuerbar ist.

Bei einer vorteilhaften Ausgestaltung wird die an der Spule anliegende Spannung erfasst, insbesondere gemittelt über eine Periodendauer der Wechselspannung, und zum Lüften der Bremse der zweite Phasenwinkel derart gestellt wird, dass die erfasste Spannung auf einen Sollspannungswert hin geregelt wird. Vorteil ist dabei, dass die an der Spule anliegende Spannung regelbar ist.

Bei einer vorteilhaften Ausgestaltung wird zum Einfallen der Bremse der Spule keine Spannung zur Verfügung gestellt, insbesondere also die Spule kurzgeschlossen wird oder für eine Zeitspanne eine Gegenspannung angelegt wird, wonach dann keine Spannung der Spule mehr zur Verfügung gestellt wird. Von Vorteil ist dabei, dass eine schnelle Entregung der Spule ausführbar ist. Hierzu ist allerdings eine Parallelschaltung von zwei Halbbrücken notwendig, die jeweils eine Reihenschaltung von zwei steuerbaren Halbleiterschaltern aufweisen, damit eine Gegenspannung erzeugbar ist.

Bei einer vorteilhaften Ausgestaltung wird der dem Verbraucher zugeführte Istwert des Stromes erfasst, insbesondere gemittelt über eine Periodendauer der Wechselspannung, und die an der Spule anliegende Spannung erfasst wird, insbesondere gemittelt über eine Periodendauer der Wechselspannung, wobei aus dem erfassten Istwert des Stroms und der erfassten, an der Spule anliegenden Spannung eine Leistung ermittelt wird, aus deren zeitlichem Verlauf unter Verwendung eines Wärmemodells der Bremse eine Temperatur der Bremse, insbesondere eine Temperatur der Spule oder eine Temperatur eines die Spule aufnehmenden Magnetkörpers der Bremse ermittelt wird,
insbesondere wobei ein Regler, insbesondere der Regler, zumindest einen von der Temperatur abhängigen Parameter, insbesondere Ohm'schen Widerstand der Spule, verwendet. Von Vorteil ist dabei, dass die Stromerfassung nicht nur für einen Stromregler verwendet wird sondern auch zur Bestimmung einer Temperatur, welche einerseits auf Überschreiten eines Schwellwerte überwachbar ist und somit eine Warnung herausgebbar ist, sondern andererseits ein von der Temperatur abhängigen Parameter des Reglers den thermischen Veränderungen nachführbar ist und dadurch einen verbesserte Regelung bewirkbar ist.

Wichtige Merkmale bei der Vorrichtung zur Durchführung eines vorgenannten Verfahrens sind, dass die Vorrichtung einen Gleichrichter, insbesondere Einweggleichrichter, aufweist, dessen wechselspannungsseitigen Anschluss eine, insbesondere einphasige, Wechselspannung speist,
wobei
- der gleichspannungsseitige Anschluss des Gleichrichters eine Parallelschaltung von zwei Halbbrücken der Vorrichtung speist, welche jeweils eine Reihenschaltung aus zwei steuerbaren Halbleiterschaltern aufweisen, deren Ansteuersignale eine Signalelektronik der Vorrichtung erzeugt,
   wobei einem Verbraucher die zwischen den beiden Knotenpunkten der jeweiligen Halbbrücken, insbesondere also Verbindungsstellen der beiden Halbleiterschalter der jeweiligen Halbbrücke, anliegende Spannung zur Verfügung gestellt wird
   oder wobei
- der gleichspannungsseitige Anschluss des Gleichrichters eine Parallelschaltung von zwei Halbbrücken der Vorrichtung speist, wobei die erste der Halbbrücken eine Reihenschaltung aus einem ersten steuerbaren Halbleiterschalter und einer ersten Diode aufweist und die zweite der Halbbrücken eine Reihenschaltung aus einem zweiten steuerbaren Halbleiterschalter und einer zweiten Diode aufweist,
   wobei die Ansteuersignale für den ersten und die Ansteuersignale für den zweiten Halbleiterschalter eine Signalelektronik der Vorrichtung erzeugt,
   wobei einem Verbraucher die zwischen den beiden Knotenpunkten der jeweiligen Halbbrücken, insbesondere also Verbindungsstellen der jeweiligen Diode und dem jeweiligen Halbleiterschalter der jeweiligen Halbbrücke, anliegende Spannung zur Verfügung gestellt wird,
   insbesondere wobei der erste steuerbare Halbleiterschalter mit dem oberen Potential des gleichspannungsseitigen Anschlusses des Gleichrichters verbunden ist und der zweite steuerbare Halbleiterschalter mit dem unteren Potential des gleichspannungsseitigen Anschlusses des Gleichrichters verbunden ist.

Von Vorteil ist dabei, dass bei der Verwendung zweier Halbbrücken, die jeweils eine Reihenschaltung zweier Halbleiterschalter aufweisen eine Gegenspannung zum schnellen Entregen der Spule, also zum Einfallen der Bremse, erzeugbar ist.

Bei einer vorteilhaften Ausgestaltung ist dem gleichspannungsseiteigen Anschluss des Gleichrichters eine Kapazität und ein Varistor parallel zugeschaltet. Von Vorteil ist dabei, dass die Kapazität als unpolarer Kondensator und somit als Filterelement fungiert. Der Varistor hingegen ermöglicht eine schnelle Entregung der Spule und somit ein schnelles Einfallen der Bremse.

Bei einer vorteilhaften Ausgestaltung ist der Verbraucher die Spule einer elektromagnetisch betätigbaren Bremse, insbesondere eines Elektromotors. Von Vorteil ist dabei, dass bei Bestromung der Spule eine Ankerscheibe vom Bremsbelagträger entgegen der von Federelementen erzeugten Kraft axial entfernbar ist und somit eine Freigabe des Bremsbelagträgers bewirkbar ist.

Bei einer vorteilhaften Ausgestaltung ist die Signalelektronik geeignet ausgeführt, die Ansteuersignale pulsweitenmoduliert auszubilden. Von Vorteil ist dabei, dass die Spannung gemäß einem Verlauf steuerbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein erstes Verfahren zur Steuerung der Spannung zur Versorgung eines Verbrauchers, insbesondere einer Spule einer elektromagnetisch betätigbaren Bremse, insbesondere eines Elektromotors oder für einen Elektromotor, dargestellt, wobei vor dem Startzeitpunkt einer Phasenanschnittsteuerung 2 eine Pulsweitenmodulation 2 ausgeführt wird.
In der Figur 2 ist im Unterschied zur Pulsweitenmodulation 1 Figur 1 ein kontinuierliches Erhöhen der Spannung ausgeführt.
In der Figur 3 ist eine Pulspaketsteuerung der Spannung dargestellt.
In der Figur 4 ist eine pulsweitenmodulierte Pulspaketsteuerung dargestellt.
In der Figur 5 ist eine Pulspaketsteuerung mit Phasenanschnittwinkel dargestellt.
In der Figur 6 ist eine Anordnung zur Durchführung des Verfahrens dargestellt.

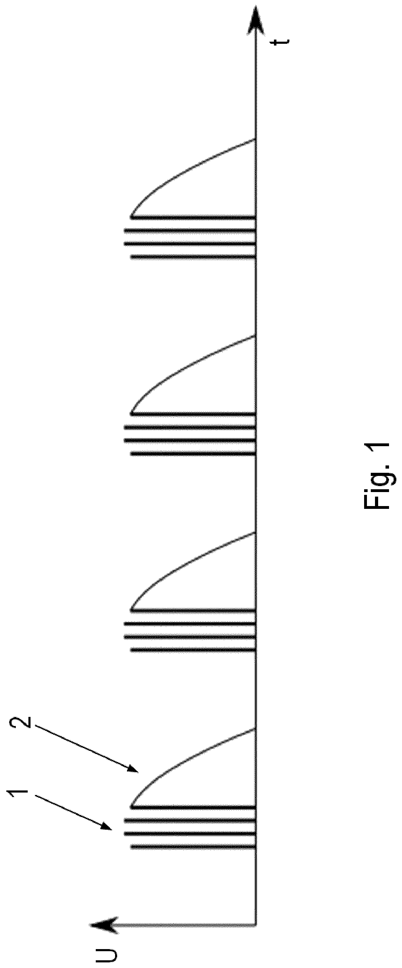

Wie in Figur 1 dargestellt, wird im Unterschied zu einer Phasenanschnittsteuerung die Spannung U nicht an einem Zeitpunkt sofort zugeschaltet, sondern zunächst pulsweitenmoduliert und danach vollständig zugeschaltet.

Vorzugsweise werden die positiven Halbwellen einer einphasigen Wechselspannung einer Parallelschaltung von zwei Halbbrücken zugeführt, welche jeweils eine Reihenschaltung aus zwei steuerbaren Halbleiterschaltern aufweisen, deren Ansteuersignale von einer Signalelektronik erzeugt werden. Aus den beiden Knotenpunkten, insbesondere also Verbindungsstellen der beiden Halbleiterschalter der jeweiligen Halbbrücke wird eine Spannung einem Verbraucher zur Verfügung gestellt.

Mit der Netzperiode periodisch wiederkehrend werden die steuerbaren Halbleiterschalter ab einem ersten Phasenwinkel der Wechselspannung pulsweitenmoduliert betrieben. Dabei wird das Pulsweitenmodulationsverhältnis als Funktion der Zeit derart gesteuert, dass ein von Null an ansteigender Verlauf der Spannung dem Verbraucher zur Verfügung gestellt wird.

Nach einer Zeitspanne, insbesondere also bei Erreichen eines zweiten Wertes an Phasenwinkel, insbesondere also an einem zweiten Phasenwinkel, der Wechselspannung, wird die Pulsweitenmodulation beendet und die Halbleiterschalter werden mit einem konstanten Spannungssignal angesteuert, so dass der der positiven Halbwelle folgende Spannungsverlauf im Wesentlichen direkt dem Verbraucher zur Verfügung gestellt wird.

Beim Nulldurchgang der Spannung werden die Halbleiterschalter derart angesteuert, insbesondere alle geöffnet oder nur die beiden oberen Halbleiterschalter der beiden Reihenschaltungen geöffnet und die beiden unteren Halbleiterschalter der beiden Reihenschaltungen geschlossen. Somit bleibt die Spannung zur Versorgung des Verbrauchers auf einem verschwindenden Wert, insbesondere Null, bis die nächste positive Halbwelle der Wechselspannung den ersten Wert erreicht.

Auf diese Weise ist ein unstetiger Anstieg der Spannung beim ersten Wert des Phasenwinkels vermeidbar, sondern die Spannung wird gemäß einem möglichst stetigen und differenzierbaren, insbesondere glatten Spannungsverlauf hochgefahren, bis die am zweiten Wert des Phasenwinkels vorhandene Spannung erreicht wird.

Besonders bevorzugt ist hierbei ein Spannungsverlauf, der gemäß einer S-Kurve verläuft, so dass die erste zeitliche Ableitung des Spannungsverlaufs beim ersten Wert Null ist und möglichst auch beim zweiten Wert. Die Krümmung ist vorzugsweise eine lineare Funktion der Länge des Spannungsverlaufs als Funktion der Zeit. Somit ist der Spannungsverlauf vorzugsweise ein Klothoidenabschnitt.

Auf jeden Fall ist der Spannungsverlauf dann besonders ruckarm, wenn die zweite, insbesondere und die dritte, zeitliche Ableitung des Spannungsverlaufs stets kleiner als ein Schwellwert ist.

Als steuerbarer Halbleiterschalter ist vorzugsweise ein IGBT oder MOSFET verwendet.

Die Spule ist in einem Magnetkörper aufgenommen, der mit dem Gehäuse des Elektromotors verbunden ist. Dabei ist eine Rotorwelle des Elektromotors drehbar gelagert mittels Lagern, die im Gehäuse aufgenommen sind. Mit der Rotorwelle ist ein Mitnehmer drehfest verbunden, insbesondere auf die Rotorwelle aufgesteckt, wobei der Mitnehmer eine Außenverzahnung aufweist, welche im Eingriff ist mit einer Innenverzahnung eines Bremsbelagträgers, der somit drehfest aber axial verschiebbar mit dem Mitnehmer verbunden ist. Eine drehfest mit dem Magnetkörper verbundene, aber axial verschiebbare Ankerscheibe aus ferromagnetischem Material wird bei Bestromjung der Spule zum Magnetkörper hin gezogen entgegen der von am Magnetkörper abgestützten Federelementen erzeugten Federkraft. Bei Nichtbestromung der Spule drücken die Federelemente die Ankerscheibe auf den Bremsbelagträger, der somit auf eine am Gehäuse, insbesondere auf eine an einem Lagerschild des Gehäuses, ausgebildete Bremsfläche gedrückt wird zur Erzeugung von Bremsmoment für die Rotorwelle. Insbesondere fungiert die mit unipolarer Spannung versorgte Spule als elektromagnetische Betätigung der Bremse.

Erfindungsgemäß sind Geräuschemissionen, Schaltverluste und EMV-Emissionen reduzierbar. Denn der glatte, also stetig differenzierbare Spannungsverlauf weist weniger Oberschwingungen auf.

Bei weiteren erfindungsgemäßen Ausführungsbeispielen wird sinusoidale Spannungsverlauf als Funktion der Zeit verwendet, wobei beim ersten Wert die zeitliche Ableitung des Spannungsverlaufs Null ist, also ein lokales Minimum, insbesondere Tiefpunkt, einer sinusoidalen Funktion vorgesehen ist und beim zweiten Wert die zeitliche Ableitung des Spannungsverlaufs stetig übergeht in die zeitliche Ableitung des der positiven Halbwelle folgenden Spannungsverlaufs.

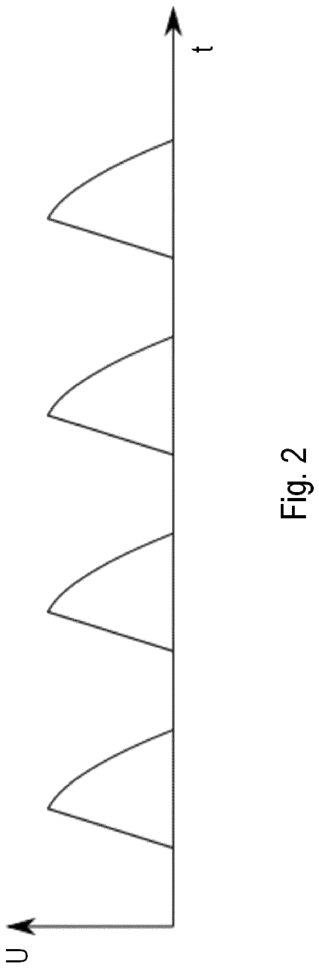

Wie in Figur 2 gezeigt, ist aber auch ein unstetiger Sprung des Spannungsverlaufs vermeidbar, indem dem Verbraucher, insbesondere also der Spule der Bremse, ein steuerbarer Halbleiterschalter, insbesondere MOSFET, in Reihe geschaltet wird und diese Reihenschaltung aus einem Gleichrichter, insbesondere Einweggleichrichter, versorgt wird. Somit ist dann durch stetiges Erhöhen der Steuerspannung des steuerbaren Halbleiterschalters ein stetiges Verringern des Durchleitwiderstandes des steuerbaren Halbleiterschalters erreichbar, wodurch sich die dem Verbraucher zur Verfügung gestellte Spannung stetig erhöht.

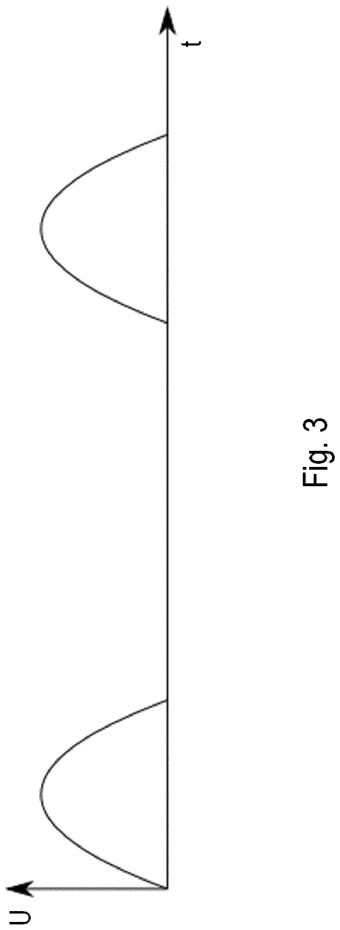

Wie in Figur 3 dargestellt, ist mittels der Verwendung eines steuerbaren Gleichrichters, insbesondere Einweggleichrichters, sind auch weniger als alle positiven Halbwellen dem Verbraucher zur Verfügung stellbar. Die über mehrere Netzperioden gemittelte, dem Verbraucher zur Verfügung gestellte Spannung ist somit geringer als bei Verwendung einer ungesteuerten Einweggleichrichtung.

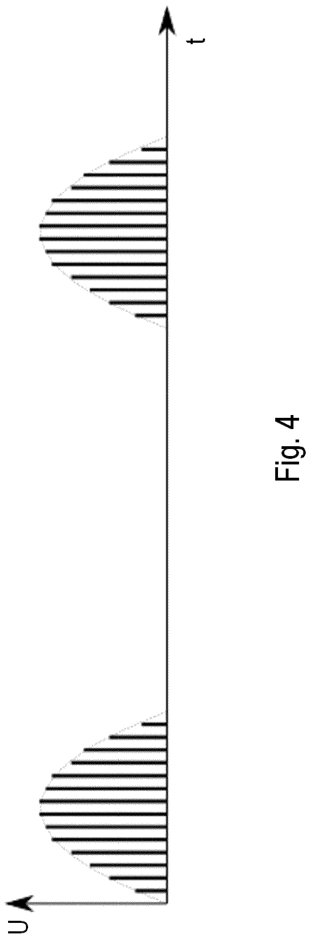

Wie in Figur 4 dargestellt, ist aber mit der für Figur 1 beschriebenen Halbbrücken aufweisenden Anordnung ein pulsweitenmodulierter Betrieb während einer jeweils ausgewählten positiven Halbwelle der Wechselspannung ausführbar. Somit ist ein glatter, insbesondere eine nur unterhalb eines Schwellwertes liegender, Spannungsverlauf dem Verbraucher zur Verfügung stellbar. Beispielsweise ist während einer der positiven Halbwellen ein sinusoidaler Spannungsverlauf dem Verbraucher zur Verfügung stellbar, welcher zu Beginn der positiven Halbwelle einen Tiefpunkt aufweist und zum Ende der positiven Halbwelle ebenfalls einen Tiefpunkt aufweist, wobei die am jeweiligen Tiefpunkt am Verbraucher anliegende Spannung Null ist. Alternativ ist aber auch ein Klothoidenabschnitte aufweisender Spannungsverlauf realisierbar. Somit ist der Spannungsverlauf wiederum glatt.

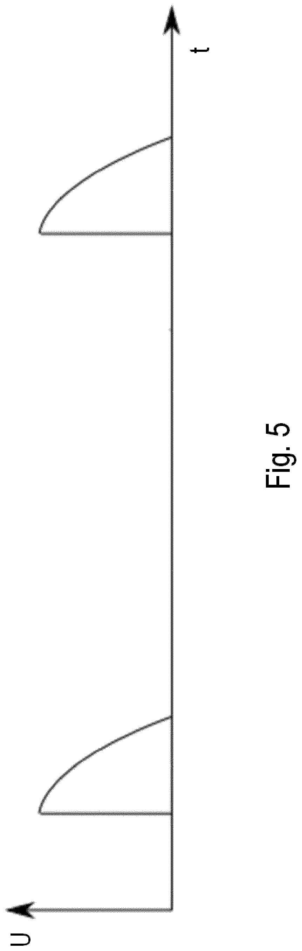

Wie in Figur 5 gezeigt, wird gemäß einem solchen Ausführungsbeispiel wiederum nicht jede positive Halbwelle der Wechselspannung durchgeleitet und außerdem mittels einer Phasenanschnittsteuerung nur ein Teil der positiven Halbwelle.

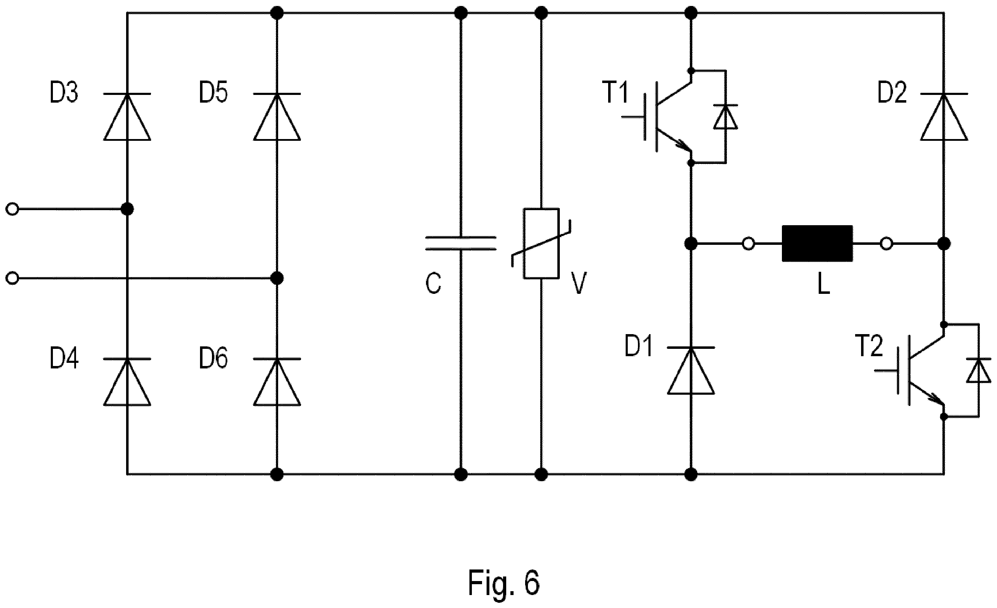

In dem in Figur 6 dargestellten Ausführungsbeispiel weist die Anordnung zur Durchführung der vorgenannten Verfahren einen Brückengleichrichter auf, der aus einer Parallelschaltung von zwei Reihenschaltungen gebildet ist. Dabei ist als erste der Reihenschaltungen eine Diode D3 mit einer Diode D4 in Reihe geschaltet und als zweite der Reihenschaltungen eine Diode D5 mit einer Diode D6.

Der Parallelschaltung parallel geschaltet ist ein Kondensator C, welcher zur Filterung dient. Vorzugswiese ist der Kondensator nicht als polarer Kondensator ausgeführt, beispielsweise als Folienkondensator.

Diesem Kondensator C ist ein Varistor V parallel zugeschaltet, der bei der Entregung der Spule L vorgesehen ist.

Der Parallelschaltung ist eine weitere Parallelschaltung parallel zugeschaltet, die aus zwei Halbbrücken besteht, wobei die erste der Halbbrücken aus der Reihenschaltung eines steuerbaren Halbleiterschalters T1 und einer Diode D1 besteht, wobei der steuerbare Halbleiterschalter T1 mit dem oberen Potential des gleichspannungsseitigen Anschlusses des Brückengleichrichters verbunden ist.
die zweite der Halbbrücken besteht aus der Reihenschaltung eines steuerbaren Halbleiterschalters T2 und einer Diode D2, wobei der steuerbare Halbleiterschalter T2 mit dem unteren Potential des gleichspannungsseitigen Anschlusses des Brückengleichrichters verbunden ist.

Den beiden steuerbaren Halbleiterschaltern (T1, T2) sind vorzugsweise jeweils Freilaufdioden parallel zugeschaltet.

Aus den Knotenpunkten der beiden Halbbrücken wird der Spule L eine Spannung zur Verfügung gestellt.

Durch synchrones pulsweitenmoduliertes Ansteuern der beiden steuerbaren Halbleiterschalter T1 und T2 wird der Spule L eine dem Pulsweitenmodulationsverhältnis entsprechende, von der am geichspannungsseitigen Anschluss des Brückengleichrichters abhängige Spannung zur Verfügung gestellt.

Zum Entregen der Spule wird der untere steuerbare Halbleiterschalter T2 in den leitenden Zustand versetzt und der obere steuerbare Halbeliterschalter T1 geöffnet. Somit läuft sich dann der Spulenstrom über den Halbleiterschalter T2 und die Diode D1 frei.

Zur Schnellentregung der Spule L werden beide Halbleiterschalter T1 und T2 geschlossen, so dass der Spulenstrom über den Varistor V fließt und dieser die Energie der Spule L in Wärme verwandelt. Auf diese Weise ist eine besonders schnelle Entregung erreichbar, also ein besonders schnelles Einfallen der Bremse. Denn nach Abbau des von der Spule erzeugten Magnetfeldes drücken die Federelemente die Ankerscheibe auf den Bremsbelagträger, der damit auf die Bremsfläche gedrückt wird.

Mittels eines in der Figur 6 nicht gezeigten Stromsensors wird der durch die Spule L fließende Strom erfasst. Die so erfassten Stromwerte werden einerseits als Istwerte einem Regler der Signalelektronik zugeführt, welcher den zweiten Phasenwinkel derart stellt, dass die Istwerte auf einen Sollstromwert, beispielsweise den Sollwert für Haltestrom der Bremse zum dauerhaften Lüften der Bremse, hinregelt. Wenn jedoch die Spannung an der Bremse gestellt wird, muss dieser Regler nicht zwingend aktiviert werden.

Darüber hinaus werden die erfassten Stromwerte aber auch verwendet und zusammen mit der an der Spule L anliegenden und mittels eines in der Figur 6 ebenfalls nicht gezeigten Sensors zur Spannungserfassung erfassten Spannung die elektrische Leistung der Spule zu bestimmen. Denn diese elektrische Leistung erwärmt die Spule und bewirkt eine abhängige vom zeitlichen Verlauf dieser elektrischen Leistung Temperatur der Spule. Der Ohm'sche Widerstand der Spule hängt von dieser Temperatur ab und wird bei der Regelung als Parameter berücksichtigt.

Zur Bestimmung der Temperatur wird ein Wärmemodell verwendet, welches die Wärmekapazitäten und Wärmeübergangswiderstände des Magnetkörpers der Bremse, der Spule und der weiteren wesentlichen Bauteile der Bremse als Parameter berücksichtigt.

### Bezugszeichenliste

1 Pulsweitenmodulation
2 Phasenanschnittsteuerung
D1 Diode
D2 Diode
D3 Diode
D4 Diode
D5 Diode
D6 Diode
T1 steuerbarer Halbleiterschalter
T2 steuerbarer Halbleiterschalter
V Varistor
C Kondensator
L Induktivität, Spule

## Patentansprüche

1. Verfahren zur Bereitstellung einer Spannung für einen Verbraucher, **nämlich** für eine Spule (L) einer elektromagnetisch betätigbaren Bremse, insbesondere eines Elektromotors,
**wobei** zeitlich wiederkehrend die positiven Halbwellen, einer, Wechselspannung ab einem ersten Phasenwinkel der Wechselspannung pulsweitenmoduliert und ab einem zweiten Phasenwinkel unmoduliert, dem Verbraucher zur Verfügung gestellt **werden,**
**dadurch gekennzeichnet, dass**
**zwischen dem ersten Phasenwinkel und dem zweiten Phasenwinkel ein Pulsweitenmodulationsverhältnis als Funktion der Zeit oder des Phasenwinkels, derart gesteuert wird, dass ein von Null an ansteigender Verlauf der Spannung, dem Verbraucher zur Verfügung gestellt wird,**
**wobei beim ersten Phasenwinkel die erste Ableitung des Verlaufs nach der Zeit Null beträgt,**
**wobei beim zweiten Phasenwinkel die erste Ableitung des Verlaufs nach der Zeit stetig verläuft.**

2. Verfahren nach Anspruch 1,
**dadurch gekennzeichnet, dass**
**die positiven Halbwellen mittels eines Einweggleichrichters erzeugt sind.**

3. **Verfahren nach einem der vorangegangenen Ansprüche,**
**dadurch gekennzeichnet, dass**
**der von Null an ansteigender Verlauf der Spannung ein von Null an ansteigender, über eine Pulsweitenmodulationsperiode gleitend gemittelter Verlauf der Spannung ist.**

4. Verfahren nach einem der vorangegangenen Ansprüche,
**dadurch gekennzeichnet, dass**
der Verlauf glatt, insbesondere stetig differenzierbar, ist,
und/oder dass
der Verlauf Klothoidenabschnitte und/oder sinusoidale Abschnitte aufweist,
und/oder dass
der Verlauf eine S-Kurve aufweist.

5. Verfahren nach einem der vorangegangenen Ansprüche,
**dadurch gekennzeichnet, dass**
die positiven Halbwellen einer einphasigen Wechselspannung einer Parallelschaltung von zwei Halbbrücken zugeführt wird, welche jeweils eine Reihenschaltung aus zwei steuerbaren Halbleiterschaltern (T1, T2) aufweisen, deren Ansteuersignale von einer Signalelektronik erzeugt werden,
wobei aus den beiden Knotenpunkten, insbesondere also Verbindungsstellen der beiden Halbleiterschalter (T1, T2), der jeweiligen Halbbrücke die Spannung dem Verbraucher zur Verfügung gestellt wird
oder dass
die positiven Halbwellen einer einphasigen Wechselspannung einer Parallelschaltung von zwei Halbbrücken zugeführt wird, welche jeweils eine Reihenschaltung aus einem steuerbaren Halbleiterschalter (T1, T2) und einer Diode (D1, D2, D3, D4, D5, D6) aufweisen,
wobei die Ansteuersignale für die beiden steuerbaren Halbleiterschalter (T1, T2) von einer Signalelektronik erzeugt werden,
wobei aus den beiden Knotenpunkten, insbesondere also Verbindungsstellen der jeweiligen Diode (D1, D2, D3, D4, D5, D6) mit dem jeweiligen Halbleiterschalter (T1, T2), der jeweiligen Halbbrücke die Spannung dem Verbraucher zur Verfügung gestellt wird.

6. Verfahren nach einem der vorangegangenen Ansprüche,
**dadurch gekennzeichnet, dass**
beim Nulldurchgang der Wechselspannung werden die Halbleiterschalter (T1, T2) derart angesteuert, insbesondere alle geöffnet oder nur der obere Halbleiterschalter (T1, T2) beziehungsweise die beiden oberen Halbleiterschalter (T1, T2) der beiden Reihenschaltungen geöffnet und der untere Halbleiterschalter (T1, T2) beziehungsweise die beiden unteren Halbleiterschalter (T1, T2) der beiden Reihenschaltungen geschlossen.

7. Verfahren nach einem der vorangegangenen Ansprüche,
**dadurch gekennzeichnet, dass**
der dem Verbraucher zugeführte Istwert des Stromes erfasst wird, insbesondere gemittelt über eine Periodendauer der Wechselspannung, und der zweite Phasenwinkel derart gestellt wird, dass der Istwert auf einen Sollwert des Stromes hingeregelt wird,
insbesondere wobei in jeder Periode der Wechselspannung dem zweiten Phasenwinkel nur ein einziger Wert zugeordnet wird.

8. Verfahren nach einem der vorangegangenen Ansprüche,
**dadurch gekennzeichnet, dass**
in einer jeweiligen Periode der Wechselspannung der erste Phasenwinkel, insbesondere abhängig vom zweiten Phasenwinkel der jeweiligen Periode der Wechselspannung, derart bestimmt wird, dass er einen vorgegebenen, insbesondere konstanten, Winkelabstand vom zweiten Phasenwinkel aufweist,
insbesondere wobei der Winkelabstand zwischen 20° und 45°, insbesondere zwischen 30° und 40°, beträgt,
insbesondere so dass bei Veränderung des zweiten Phasenwinkels der Verlauf angepasst werden muss.

9. Verfahren nach einem der vorangegangenen Ansprüche,
**dadurch gekennzeichnet, dass**
die Pulsweitenmodulationsfrequenz zwischen 5kHz und 100 kHz beträgt, insbesondere im nichthörbaren Beriech liegt und/oder zwischen 15 und 30 kHz beträgt.

10. Verfahren nach einem der vorangegangenen Ansprüche,
**dadurch gekennzeichnet, dass**
die Wechselspannung erfasst wird, insbesondere gemittelt über eine Periodendauer der Wechselspannung, und zum Lüften der Bremse der zweite Phasenwinkel derart gesteuert wird, dass eine an der Spule (L) anliegende Sollspannung der Spule (L) bereitgestellt wird.

11. Verfahren nach einem der vorangegangenen Ansprüche,
**dadurch gekennzeichnet, dass**
die an der Spule (L) anliegende Spannung erfasst wird, insbesondere gemittelt über eine Periodendauer der Wechselspannung, und zum Lüften der Bremse der zweite Phasenwinkel derart gestellt wird, dass die erfasste Spannung auf einen Sollspannungswert hin geregelt wird.

12. Verfahren nach einem der vorangegangenen Ansprüche,
**dadurch gekennzeichnet, dass**
zum Einfallen der Bremse der Spule (L) keine Spannung zur Verfügung gestellt wird, insbesondere also die Spule (L) kurzgeschlossen wird oder für eine Zeitspanne eine Gegenspannung angelegt wird, wonach dann keine Spannung der Spule (L) mehr zur Verfügung gestellt wird.

13. Verfahren nach einem der vorangegangenen Ansprüche,
**dadurch gekennzeichnet, dass**
der dem Verbraucher zugeführte Istwert des Stromes erfasst wird, insbesondere gemittelt über eine Periodendauer der Wechselspannung, und die an der Spule (L) anliegende Spannung erfasst wird, insbesondere gemittelt über eine Periodendauer der Wechselspannung,
wobei aus dem erfassten Istwert des Stroms und der erfassten, an der Spule (L) anliegenden Spannung eine Leistung ermittelt wird, aus deren zeitlichem Verlauf unter Verwendung eines Wärmemodells der Bremse eine Temperatur der Bremse, insbesondere eine Temperatur der Spule (L) oder eine Temperatur eines die Spule (L) aufnehmenden Magnetkörpers der Bremse ermittelt wird,
insbesondere wobei ein Regler, insbesondere der Regler, zumindest einen von der Temperatur abhängigen Parameter, insbesondere Ohm'schen Widerstand der Spule (L), verwendet.

14. Vorrichtung eingerichtet zur Durchführung eines Verfahrens nach einem der vorangegangenen Ansprüche,
wobei die Vorrichtung einen Gleichrichter, insbesondere Einweggleichrichter, Brückengleichrichter oder Mittelpunktgleichrichter, aufweist, dessen wechselspannungsseitigen Anschluss eine, insbesondere einphasige, Wechselspannung speist,
**dadurch gekennzeichnet, dass**
- der gleichspannungsseitige Anschluss des Gleichrichters eine Parallelschaltung von zwei Halbbrücken der Vorrichtung speist, welche jeweils eine Reihenschaltung aus zwei steuerbaren Halbleiterschaltern (T1, T2) aufweisen, deren Ansteuersignale eine Signalelektronik der Vorrichtung erzeugt,
wobei einem Verbraucher die zwischen den beiden Knotenpunkten der jeweiligen Halbbrücken, insbesondere also Verbindungsstellen der beiden Halbleiterschalter (T1, T2) der jeweiligen Halbbrücke, anliegende Spannung zur Verfügung gestellt wird
oder dass
- der gleichspannungsseitige Anschluss des Gleichrichters eine Parallelschaltung von zwei Halbbrücken der Vorrichtung speist, wobei die erste der Halbbrücken eine Reihenschaltung aus einem ersten steuerbaren Halbleiterschalter (T1, T2) und einer ersten Diode (D1, D2, D3, D4, D5, D6) aufweist und die zweite der Halbbrücken eine Reihenschaltung aus einem zweiten steuerbaren Halbleiterschalter (T1, T2) und einer zweiten Diode (D1, D2, D3, D4, D5, D6) aufweist,
wobei die Ansteuersignale für den ersten und die Ansteuersignale für den zweiten Halbleiterschalter (T1, T2) eine Signalelektronik der Vorrichtung erzeugt,
wobei einem Verbraucher die zwischen den beiden Knotenpunkten der jeweiligen Halbbrücken, insbesondere also Verbindungsstellen der jeweiligen Diode (D1, D2, D3, D4, D5, D6) und dem jeweiligen Halbleiterschalter (T1, T2) der jeweiligen Halbbrücke, anliegende Spannung zur Verfügung gestellt wird,
insbesondere wobei der erste steuerbare Halbleiterschalter (T1, T2) mit dem oberen Potential des gleichspannungsseitigen Anschlusses des Gleichrichters verbunden ist und der zweite steuerbare Halbleiterschalter (T1, T2) mit dem unteren Potential des gleichspannungsseitigen Anschlusses des Gleichrichters verbunden ist.

15. Vorrichtung nach **Anspruch 14,**
**dadurch gekennzeichnet, dass**
der Verbraucher die Spule (L) einer elektromagnetisch betätigbaren Bremse, insbesondere eines Elektromotors, ist,
und/oder dass
die Signalelektronik geeignet ausgeführt ist, die Ansteuersignale pulsweitenmoduliert auszubilden.

## Claims

1. Method for providing a voltage for a load, namely for a coil (L) of an electromagnetically actuatable brake, in particular of an electric motor,
wherein, in a manner repeated over time, the positive half-waves of an AC voltage are made available to the load in a pulse-width-modulated manner starting from a first phase angle of the AC voltage, and in an unmodulated manner starting from a second phase angle,
**characterized in that** between the first phase angle and the second phase angle a pulse width modulation ratio as a function of time or of the phase angle is controlled such that a curve of the voltage increasing from zero is made available to the load,
wherein at the first phase angle the first time derivative of the curve is zero,
wherein at the second phase angle the first time derivative of the curve is continuous.

2. Method according to claim 1,
**characterized in that**
the positive half-waves are generated by means of a half-wave rectifier.

3. Method according to any of the preceding claims,
**characterized in that**
the curve of the voltage increasing from zero is a curve of the voltage increasing from zero and averaged using a moving average over a pulse width modulation period.

4. Method according to any of the preceding claims,
**characterized in that**
the curve is smooth, in particular continuously differentiable, and/or **in that**
the curve comprises clothoidal sections and/or sinusoidal sections,
and/or **in that**
the curve comprises an S-curve.

5. Method according to any of the preceding claims, **characterized in that**
the positive half-waves of a single-phase AC voltage are supplied to a parallel connection of two half-bridges, each of which comprises a series connection of two controllable semiconductor switches (T1, T2), the actuation signals for which are generated by signal electronics,
wherein the voltage is made available to the load from the two nodes, that is to say in particular the connection points between the two semiconductor switches (T1, T2) of the respective half-bridge,
or **in that**
the positive half-waves of a single-phase AC voltage are supplied to a parallel connection of two half-bridges, each of which comprises a series connection of one controllable semiconductor switch (T1, T2) and one diode (D1, D2, D3, D4, D5, D6),
wherein the actuation signals for the two controllable semiconductor switches (T1, T2) are generated by signal electronics,
wherein the voltage is made available to the load from the two nodes, that is to say in particular the connection points between the respective diode (D1, D2, D3, D4, D5, D5) and the respective semiconductor switch (T1, T2) of the respective half-bridge.

6. Method according to any of the preceding claims,
**characterized in that**
at the zero crossing of the AC voltage the semiconductor switches (T1, T2) are controlled such that in particular all are opened or only the upper semiconductor switch (T1, T2) or the two upper semiconductor switches (T1, T2) of the two series connections are opened and the lower semiconductor switch (T1, T2) or the two lower semiconductor switches (T1, T2) of the two series connections are closed.

7. Method according to any of the preceding claims,
**characterized in that**
the actual value of the current supplied to the load is detected, in particular in a manner averaged over a period of the AC voltage, and the second phase angle is set such that the actual value is adjusted to a target value of the current,
in particular wherein only a single value is assigned to the second phase angle in each period of the AC voltage.

8. Method according to any of the preceding claims,
**characterized in that**
in a respective period of the AC voltage, the first phase angle is determined, in particular depending on the second phase angle of the respective period of the AC voltage, such that it is at a specified, in particular constant, angular distance from the second phase angle,
in particular wherein the angular distance is between 20° and 45°, in particular between 30° and 40°,
in particular such that the curve must be adjusted when the second phase angle changes.

9. Method according to any of the preceding claims,
**characterized in that**
the pulse width modulation frequency is between 5 kHz and 100 kHz, in particular in the inaudible range and/or between 15 and 30 kHz.

10. Method according to any of the preceding claims,
**characterized in that**
the AC voltage is detected, in particular in a manner averaged over a period of the AC voltage, and in order to release the brake the second phase angle is controlled such that a target voltage applied to the coil (L) is provided to the coil (L).

11. Method according to any of the preceding claims,
**characterized in that**
the voltage applied to the coil (L) is detected, in particular in a manner averaged over a period of the AC voltage, and in order to release the brake the second phase angle is set such that the detected voltage is adjusted to a target voltage value.

12. Method according to any of the preceding claims,
**characterized in that**,
in order to apply the brake, no voltage is made available to the coil (L), that is to say in particular the coil (L) is shortcircuited or a reverse voltage is applied for a period of time, after which there is no longer any voltage made available to the coil (L).

13. Method according to any of the preceding claims,
**characterized in that**
the actual value of the current supplied to the load is detected, in particular in a manner averaged over a period of the AC voltage, and the voltage applied to the coil (L) is detected, in particular in a manner averaged over a period of the AC voltage,
wherein, on the basis of the detected actual value of the current and the detected voltage applied to the coil (L), a power is determined, and on the basis of the time curve of the latter a temperature of the brake, in particular a temperature of the coil (L) or a temperature of a magnetic body of the brake that accommodates the coil (7), is determined using a thermal model of the brake,
in particular wherein a controller, in particular the controller, uses at least one parameter dependent on the temperature, in particular the ohmic resistance of the coil (L).

14. Device configured for carrying out a method according to any of the preceding claims,
wherein the device comprises a rectifier, in particular a half-wave rectifier, a bridge rectifier or a center-tap rectifier, the AC-side terminal of which feeds an AC voltage, in particular a single-phase AC voltage,
**characterized in that**
- the DC-side terminal of the rectifier feeds a parallel connection of two half-bridges of the device, each of which comprises a series connection of two controllable semiconductor switches (T1, T2), the actuation signals for which are generated by signal electronics of the device, wherein the voltage applied between the two nodes of the respective half-bridges, that is to say the connection points between the two semiconductor switches (T1, T2) of the respective half-bridge, is made available to a load,
or **in that**
- the DC-side terminal of the rectifier feeds a parallel connection of two half-bridges of the device, wherein the first of the half-bridges comprises a series connection of a first controllable semiconductor switch (T1, T2) and a first diode (D1, D2, D3, D4, D5, D6) and the second of the half-bridges comprises a series connection of a second controllable semiconductor switch (T1, T2) and a second diode (D1, D2, D3, D4, D5, D6),
wherein signal electronics of the device generate the actuation signals for the first semiconductor switch (T1) and the actuation signals for the second semiconductor switch (T2),
wherein the voltage applied between the two nodes of the respective half-bridges, that is to say in particular the connection points between the respective diode (D1, D2, D3, D4, D5, D6) and the respective semiconductor switch (T1, T2) of the respective half-bridge, is made available to a load,
in particular wherein the first controllable semiconductor switch (T1, T2) is connected to the upper potential of the DC-side terminal of the rectifier and the second controllable semiconductor switch (T1, T2) is connected to the lower potential of the DC-side terminal of the rectifier.

15. Device according to claim 14,
**characterized in that**
the load is the coil (L) of an electromagnetically actuatable brake, in particular of an electric motor,
and/or **in that**
the signal electronics are configured to be suitable for forming the actuation signals in a pulse-width-modulated manner.

## Revendications

1. Procédé pour la fourniture d'une tension à un consommateur**,** à savoir à une bobine (L) d'un frein actionné électromagnétiquement, en particulier d'un moteur électrique,
dans lequel les demi-ondes positives d'une tension alternative à partir d'un premier angle de phase de la tension alternative sont fournies au consommateur de manière modulée en largeur d'impulsion et à partir d'un deuxième angle de phase de manière non modulée,
**caractérisé en ce que**
entre le premier angle de phase et le deuxième angle de phase, un rapport de modulation de largeur d'impulsion en fonction du temps ou de l'angle de phase est commandé de telle sorte qu'une évolution de la tension augmentant à partir de zéro est fournie au consommateur,
dans lequel au premier angle de phase, la première dérivée de l'évolution par rapport au temps est zéro,
dans lequel au deuxième angle de phase, la première dérivée de l'évolution par rapport au temps est continue.

2. Procédé selon la revendication 1, **caractérisé en ce que** les demi-ondes positives sont générées au moyen d'un redresseur simple alternance.

3. Procédé selon l'une des revendications précédentes, **caractérisé en ce que** l'évolution de la tension augmentant à partir de zéro est une évolution de la tension augmentant à partir de zéro, moyennée glissant sur une période de modulation de largeur d'impulsion.

4. Procédé selon l'une des revendications précédentes, **caractérisé en ce que** l'évolution est lisse, en particulier en continu différentiable,
et/ou **en ce que**
l'évolution présente des segments de clothoïde et/ou des segments sinusoïdaux,
et/ou **en ce que**
l'évolution présente une courbe en S.

5. Procédé selon l'une des revendications précédentes, **caractérisé en ce que** les demi-ondes positives d'une tension alternative monophasée sont acheminées à un montage en parallèle de deux demi-ponts, lesquels présentent chacun un montage en série de deux interrupteurs semi-conducteurs commandables (T1, T2), dont les signaux de commande sont générés par une électronique de commande,
dans lequel à partir des deux nœuds, en particulier donc des points de connexion des deux interrupteurs semi-conducteurs (T1, T2) de chaque demi-pont, la tension est fournie au consommateur
ou **en ce que**
les demi-ondes positives d'une tension alternative monophasée sont acheminées à un montage en parallèle de deux demi-ponts, lesquels présentent chacun un montage en série d'un interrupteur semi-conducteur commandable (T1, T2) et d'une diode (D1, D2, D3, D4, D5, D6),
dans lequel les signaux de commande pour les deux interrupteurs semi-conducteurs commandables (T1, T2) sont générés par une électronique de commande,
dans lequel à partir des deux nœuds, en particulier donc des points de connexion de la diode respective (D1, D2, D3, D4, D5, D6) avec l'interrupteur semi-conducteur respectif (T1, T2) de chaque demi-pont, la tension est fournie au consommateur.

6. Procédé selon l'une des revendications précédentes, **caractérisé en ce qu'**au passage par zéro de la tension alternative, les interrupteurs semi-conducteurs (T1, T2) sont commandés de telle sorte, en particulier tous ouverts ou seulement l'interrupteur semi-conducteur supérieur (T1, T2) ou les deux interrupteurs semi-conducteurs supérieurs (T1, T2) des deux montages en série sont ouverts et l'interrupteur semi-conducteur inférieur (T1, T2) ou les deux interrupteurs semi-conducteurs inférieurs (T1, T2) des deux montages en série sont fermés.

7. Procédé selon l'une des revendications précédentes,
**caractérisé en ce que**
la valeur réelle du courant fournie au consommateur est détectée, en particulier moyennée sur une durée de période de la tension alternative, et le deuxième angle de phase est réglé de telle sorte que la valeur réelle est régulée vers une valeur de consigne du courant,
en particulier dans chaque période de la tension alternative, une seule et unique valeur est attribuée au deuxième angle de phase.

8. Procédé selon l'une des revendications précédentes,
**caractérisé en ce que**
dans une période respective de la tension alternative, le premier angle de phase, en particulier dépendant du deuxième angle de phase de la période respective de la tension alternative, est déterminé de telle sorte qu'il présente un écart angulaire prédéterminé, en particulier constant, par rapport au deuxième angle de phase,
en particulier dans lequel l'écart angulaire est compris entre 20° et 45°, en particulier entre 30° et 40°,
en particulier de sorte qu'en cas de modification du deuxième angle de phase, l'évolution doit être adaptée.

9. Procédé selon l'une des revendications précédentes, **caractérisé en ce que** la fréquence de modulation de largeur d'impulsion est comprise entre 5 kHz et 100 kHz, en particulier dans le domaine inaudible et/ou entre 15 et 30 kHz.

10. Procédé selon l'une des revendications précédentes, **caractérisé en ce que** la tension alternative est détectée, en particulier moyennée sur une durée de période de la tension alternative, et pour desserrer le frein, le deuxième angle de phase est commandé de telle sorte qu'une valeur de consigne de tension appliquée à la bobine (L) est fournie à la bobine (L).

11. Procédé selon l'une des revendications précédentes, **caractérisé en ce que** la tension appliquée à la bobine (L) est détectée, en particulier moyennée sur une durée de période de la tension alternative, et pour desserrer le frein, le deuxième angle de phase est réglé de telle sorte que la tension détectée est régulée vers une valeur de consigne de tension.

12. Procédé selon l'une des revendications précédentes, **caractérisé en ce que** pour l'enclenchement du frein, aucune tension n'est fournie à la bobine (L), en particulier donc la bobine (L) est court-circuitée ou une tension inverse est appliquée pendant une période de temps, après quoi aucune tension n'est plus fournie à la bobine (L).

13. Procédé selon l'une des revendications précédentes,
**caractérisé en ce que**
la valeur réelle du courant fournie au consommateur est détectée, en particulier moyennée sur une durée de période de la tension alternative, et la tension appliquée à la bobine (L) est détectée, en particulier moyennée sur une durée de période de la tension alternative,
dans lequel à partir de la valeur réelle détectée du courant et de la tension détectée appliquée à la bobine (L), une puissance est déterminée, à partir de l'évolution temporelle de laquelle, en utilisant un modèle thermique du frein, une température du frein, en particulier une température de la bobine (L) ou une température d'un corps magnétique recevant la bobine (L) du frein est déterminée,
en particulier dans lequel un régulateur, en particulier le régulateur, utilise au moins un paramètre dépendant de la température, en particulier la résistance ohmique de la bobine (L).

14. Dispositif conçu pour la mise en œuvre d'un procédé selon l'une des revendications précédentes,
dans lequel le dispositif présente un redresseur, en particulier un redresseur simple alternance, un pont redresseur ou un redresseur à point milieu, dont la connexion côté courant alternatif est alimentée par une tension alternative, en particulier monophasée,
**caractérisé en ce que**
- la connexion côté courant continu du redresseur alimente un montage en parallèle de deux demi-ponts du dispositif, lesquels présentent chacun un montage en série de deux interrupteurs semi-conducteurs commandables (T1, T2), dont les signaux de commande sont générés par une électronique de commande du dispositif,
- dans lequel une tension appliquée entre les deux nœuds de chaque demi-pont, en particulier donc les points de connexion des deux interrupteurs semi-conducteurs (T1, T2) de chaque demi-pont, est fournie à un consommateur
ou **en ce que**
- la connexion côté courant continu du redresseur alimente un montage en parallèle de deux demi-ponts du dispositif, dans lequel le premier des demi-ponts présente un montage en série d'un premier interrupteur semi-conducteur commandable (T1, T2) et d'une première diode (D1, D2, D3, D4, D5, D6) et le second des demi-ponts présente un montage en série d'un second interrupteur semi-conducteur commandable (T1, T2) et d'une seconde diode (D1, D2, D3, D4, D5, D6),
dans lequel les signaux de commande pour le premier et les signaux de commande pour le second interrupteur semi-conducteur (T1, T2) sont générés par une électronique de commande du dispositif,
dans lequel une tension appliquée entre les deux nœuds de chaque demi-pont, en particulier donc les points de connexion de la diode respective (D1, D2, D3, D4, D5, D6) et de l'interrupteur semi-conducteur respectif (T1, T2) de chaque demi-pont, est fournie à un consommateur,
en particulier dans lequel le premier interrupteur semi-conducteur commandable (T1, T2) est connecté au potentiel supérieur de la connexion côté courant continu du redresseur et le second interrupteur semi-conducteur commandable (T1, T2) est connecté au potentiel inférieur de la connexion côté courant continu du redresseur.

15. Dispositif selon la revendication 14, **caractérisé en ce que**
le consommateur est la bobine (L) d'un frein actionné électromagnétiquement, en particulier d'un moteur électrique,
et/ou **en ce que**
l'électronique de commande est conçue de manière appropriée pour former les signaux de commande de manière modulée en largeur d'impulsion.
